# EUROPÄISCHE PATENTSCHRIFT

(11) **EP 4 004 958 B1**
(45) Veröffentlichungstag und Bekanntmachung des Hinweises auf die Patenterteilung: **04.10.2023**
(21) Anmeldenummer: 20745083.4
(22) Anmeldetag: 10.07.2020
(51) Int. Cl.: H01H 39/00, H01H 9/34

(54) **STROMTRENNER**
CURRENT BREAKER
SECTIONNEUR

(30) Priorität: 12.07.2019 AT 506352019
(43) Veröffentlichungstag der Anmeldung: 01.06.2022
(73) Patentinhaber: Astotec Automotive GmbH, 2552 Hirtenberg (AT)
(72) Erfinder: HABA, Dietmar, 2500 Baden (AT); MARKER, Ludwig, 2560 Grillenberg (AT); AIGNER, Kurt, 1130 Wien (AT)
(74) Vertreter: Müllner, Martin
(86) Internationale Anmeldenummer: PCT/AT2020/060268
(87) Internationale Veröffentlichungsnummer: WO 2021/007604

(56) Entgegenhaltungen:
- EP-A1- 1 447 640
- DE-A1-102018 125 059
- DE-U1-202018 100 728
- US-A- 5 990 572
- US-A1- 2017 229 268

## Beschreibung

### Technisches Gebiet

Die vorliegende Erfindung betrifft einen Stromtrenner mit einer Stromschiene und einem Kolben, der in einem von der Stromschiene durchsetzten Hohlraum bewegbar ist, zum Herausbrechen einer Platine aus der Stromschiene, wobei der Stromtrenner zumindest ein metallisches Filterelement aufweist.

### Stand der Technik

Ein derartiger Stromtrenner ist aus patcit0001:DE 102018125059 A bekannt. Er weist Ausblaskanäle für den bei der Trennung entstehenden Lichtbogen auf, in denen metallische Filterelemente vorhanden sein können, die das Plasma des Lichtbogens kühlen und somit zu einem rascheren Erlöschen des Lichtbogens beitragen. Die Ausblaskanäle verbinden den Hohlraum, in dem sich der Kolben bewegt und in dem sich der Lichtbogen ausbildet, mit der Umgebung des Stromtrenners. Das Filtermaterial befindet sich nur im Inneren der Ausblaskanäle, d.h. der an den Hohlraum angrenzende Bereich der Ausblaskanäle ist frei von Filtermaterial.

### Darstellung der Erfindung

Es ist Aufgabe der vorliegenden Erfindung, solch einen Stromtrenner weiter zu verbessern, sodass die Außenwirkung noch weiter reduziert wird.

Diese Aufgabe wird durch einen Stromtrenner der eingangs genannten Art erfindungsgemäß dadurch gelöst, dass das Filterelement bis zu dem Hohlraum reicht. Dadurch wird erreicht, dass die abgetrennte Platine während der Auslösung das zumindest eine Filterelement berührt. Nach Trennung der Platine aus dem Leiter bildet sich zwischen dem Ende der Stromschiene und der Platine ein Lichtbogen aus. Infolge der Berührung des Filterelements durch die Platine steigt der Lichtbogen bei weiterer Entfernung der Platine von den Enden der Stromschiene auf das metallische Filterelement um, wodurch die Energie aus der Systeminduktivität in Verlustwärme im Filter umgewandelt wird. Bei geeigneter Auslegung kommt es nur zu einem moderaten Druckanstieg im Stromtrenner und somit zu praktisch keiner Außenwirkung. Überraschenderweise wird also die Außenwirkung fast vollständig verhindert, auch dann, wenn kein zusätzliches Löschmittel im Stromtrenner vorhanden ist.

Vorzugsweise ist das Filterelement im nicht ausgelösten Zustand elektrisch von der Stromschiene isoliert. Auf diese Weise ist nach der Auslösung eine galvanische Trennung der beiden Enden der Stromschiene sichergestellt, eine elektrische Verbindung zwischen Stromschiene und Filterelementen wird nur durch den Lichtbogen hergestellt.

Erfindungsgemäß befinden sich auf beiden Seiten des Kolbens unterhalb der Stromschiene metallische Filterelemente, sodass die Platine während der Auslösung die Filterelemente elektrisch verbindet. Somit fließt der Strom während des Trennvorgangs über beide Filterelemente und die Platine. Die Energie aus der Systeminduktivität verteilt sich somit auf zwei Filterelemente.

Die Platine kann nach der Auslösung zwischen den Filterelementen verbleiben oder diese wieder verlassen. Um eine galvanische Trennung nach der Auslösung sicherzustellen, ist ein Verbleiben zwischen den Filterelementen nur dann zweckmäßig, wenn zumindest ein Filterelement im nicht ausgelösten Zustand elektrisch von der Stromschiene isoliert ist.

Zur Verbesserung der Löschwirkung ist nach einer Ausgestaltung der Erfindung im Stromtrenner zusätzlich ein Löschmittel vorgesehen. Vorzugsweise ist das Löschmittel eine Siliziumverbindung, insbesondere ein Silikonöl oder ein silikonhältiges Fett.

Es ist günstig, wenn sich im Gehäuse Aussparungen zwischen der Stromschiene und den Filterelementen befinden. Derartige Aussparungen im Gehäuse verhindern ein Einquetschen des Lichtbogens durch den Trennstempel, sodass die Umwandlung der Energie aus der Systeminduktivität in Verlustwärme in den Filterelementen nicht beeinträchtigt wird.

Ein besonderer Vorteil der Erfindung besteht darin, dass das Gehäuse abgedichtet sein kann, weil der Druckanstieg nur gering ist. Durch die Abdichtung wird die Au-ßenwirkung nochmals reduziert. Somit können auch die Filterelemente gegenüber der Außenwelt isoliert sein. Die Filterelemente wirken dann nur als thermische Senke. Dadurch ergibt sich als weiterer Vorteil, dass sich keine äußeren Lichtbögen von den Filterelementen aus bilden können.

Wenn seitlich der Stromschiene zumindest ein weiteres Filterelement vorgesehen ist, wird die Kühlwirkung der Filterelemente noch weiter verstärkt.

Vorzugsweise ist das Filterelement bzw. sind die Filterelemente aus nichtrostendem Stahl, insbesondere in Form eines Metallgewirks, gebildet. Im Fall von Metallgewirk ist die Berührung der Filterelemente durch die Platine besonders leicht realisierbar. Das Metallgewirk kann geringfügig in den Hohlraum ragen und wird von der Platine entweder elastisch zurückgedrückt oder abgeschert. In beiden Fällen ergibt sich ein guter Kontakt.

Stromtrenner dieser Bauart können Ströme bis 23kA und Spannungen bis 1000V sicher unterbrechen.

### Kurze Beschreibung der Zeichnungen

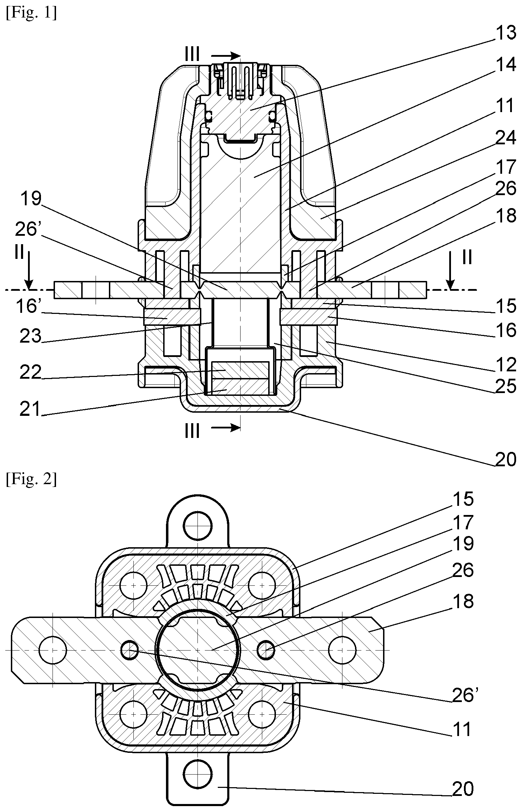

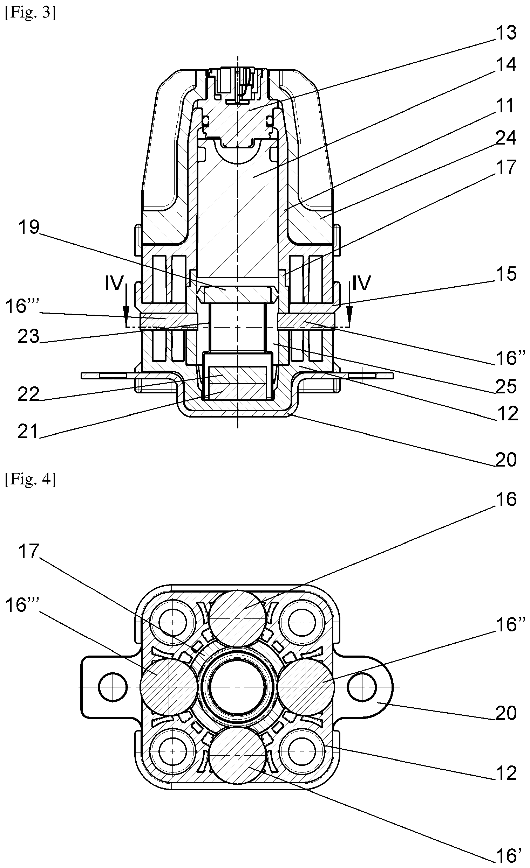

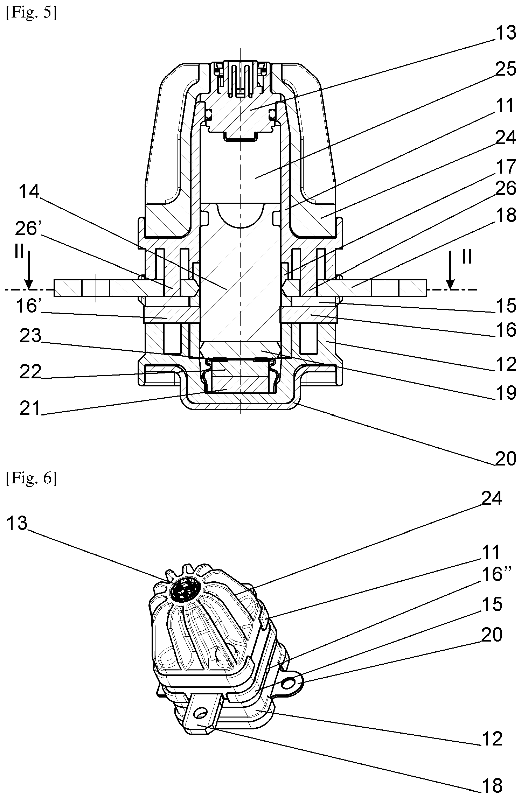

An Hand der beiliegenden Zeichnungen wird die vorliegende Erfindung näher erläutert. Es zeigt: Fig. 1 einen Längsschnitt durch einen erfindungsgemäßen Stromtrenner in nicht ausgelöstem Zustand in einer Ebene, die die Stromschiene enthält; Fig. 2 zeigt einen Schnitt entlang der Linie II-II von Fig. 1; Fig. 3 zeigt einen Schnitt entlang der Linie III-III von Fig. 1; Fig. 4 zeigt einen Schnitt entlang der Linie IV-IV von Fig. 3; Fig. 5 zeigt eine Ansicht des Stromtrenners analog zu Fig. 1, wobei sich der Stromtrenner im ausgelösten Zustand befindet; und Fig. 6 zeigt den Stromtrenner in perspektivischer Ansicht.

### Bester Weg zur Ausführung der Erfindung

Das Gehäuse des Stromtrenners wird durch einen Oberteil 11 und einen Unterteil 12 gebildet. Der Unterteil 12 ist durch einen unteren Stützring 20 unterstützt, der den Unterteil 12 hält und verstärkt. Oberteil 11 und Unterteil 12 sind fest miteinander verbunden, z.B. verschraubt. Der Oberteil 11 ist durch ein Verstärkungselement 24 verstärkt. Zwischen Oberteil 11 und Unterteil 12 befindet sich eine Stromschiene 18. Damit die Stromschiene 18 auch nach Auslösung sicher im Gehäuse fixiert ist, weist sie zu beiden Seiten jeweils ein Loch auf, in das ein Vorsprung 26, 26' des Oberteils eingreift. Die Stromschiene 18 ist somit formschlüssig fixiert.

Im Oberteil befindet sich ein Zünder 13, der - wenn er gezündet wird - einen Kolben 14 mit Druck beaufschlagt. Der Kolben 14 ist in einem Hohlraum 25 beweglich. Dieser Hohlraum 25 befindet sich teilweise im Oberteil 11 und teilweise im Unterteil 12. Zunächst befindet sich der Kolben 14 vollständig im Oberteil 11, also oberhalb der Stromschiene 18. Wird er mit Druck beaufschlagt, bewegt er sich zumindest teilweise in den Hohlraum 25 im Unterteil (siehe Fig. 5), wobei er eine Platine 19 aus der Stromschiene 18 herausstanzt.

Unterhalb der Stromschiene 18 befinden sich zwei Filterelemente 16, 16'. Dazwischen befindet sich eine Isolierplatte 15, die sicherstellt, dass zwischen der Stromschiene 18 und den Filterelementen 16,16' kein elektrischer Kontakt besteht.

Die durch Reduzierung der Dicke der Stromschiene 18 vorgegebenen Sollbruchstellen sind durch eine Umspritzung 17 umspritzt, was dazu führt, dass der Lichtbogen, der während der Stromtrennung entsteht, nur von der Sollbruchstelle zur Platine 19 austreten kann. Im Gegensatz dazu wandert der Austrittspunkt bei den bekannten Stromtrennern an die Unterkante der Stromschiene 18.

Am unteren Ende des Hohlraums 25 befindet sich weiteres Filtermaterial 21, 22, das als Anschlag und als Wärmesenke dient. Über diesem bzw. um dieses herum ist ein Bremselement 23 vorgesehen, das die Bewegung der Platine 19 bzw. des Kolbens 14 nach unten verzögert, woraus eine Anpassung der Stromänderung und der daraus resultierenden induzierten Spannung resultiert.

Seitlich neben der Stromschiene 18 befinden sich weitere Filterelemente 16", 16‴ (siehe Fig. 3 und 4), die als zusätzliche Wärmesenke dienen.

Der erfindungsgemäße Stromtrenner funktioniert wie folgt: Zunächst bilden sich kurzstreckige Lichtbögen zwischen Stromschiene 18 und Platine 19. Im Folgenden bewegt sich die Platine 19 nach unten und die Lichtbögen werden gelängt. Diese Längung findet zuerst entlang der Isolierplatte 15 statt, später entlang der metallischen Filterelemente 16, 16'. Nun erfolgt ein Umstieg des Lichtbogens in die Filterelemente 16, 16', der Strom fließt also durch die Filterelemente 16, 16' zur Platine 19.

Der Sinn besteht darin, die Filterelemente 16, 16' als Lastwiderstände zu verwenden und die induktive Energie des Stromkreises in den Filterelementen 16, 16' in Wärme umzuwandeln.

Die Platine 19 kann auf der Höhe der Unterkante der Filterelemente 16, 16' zum Stehen gebracht werden und mit den Filterelementen 16, 16' in Kontakt bleiben. Da die Filterelemente 16, 16' durch die Isolierplatte 15 von den Resten der Stromschiene 18 galvanisch getrennt sind, ist der Stromkreis nach Erlöschen der Lichtbögen trotzdem sicher getrennt. Die Platine 19 kann aber - wie im Ausführungsbeispiel dargestellt - auch noch weiter nach unten fahren. In diesem Fall bilden sich - nachdem die Platine 19 die Filterelemente 16, 16' wieder verlassen hat - zwei weitere Lichtbögen aus, die durch die Bewegung der Platine 19 gelängt werden.

Ist die induktive Energie verbraucht, werden die Lichtbögen durch Klemmung zwischen Umspritzung 17 und Kolben 14 gelöscht. In diesem Zustand besteht keine leitende Verbindung zwischen den beiden Anschlüssen der Stromschiene 18.

Die Filterelemente können - wie im Ausführungsbeispiel dargestellt - eine Verbindung zur Umgebung haben und somit zur Filterung und Kühlung eines entweichenden Überdruckes verwendet werden. In einer besonders bevorzugten Ausführungsform besitzen sie jedoch keine Verbindung nach außen, um die Außenwirkung zu minieren. Der Überdruck wird dann nur von den Filterelementen 16, 16', 16" und 16‴ und dem weiteren Filtermaterial 21, 22 aufgenommen.

## Patentansprüche

1. Stromtrenner mit einer Stromschiene (18) und einem Kolben (14), der in einem von der Stromschiene durchsetzten Hohlraum (25) bewegbar ist, zum Herausbrechen einer Platine (19) aus der Stromschiene (18), wobei der Stromtrenner zumindest ein metallisches Filterelement (16) aufweist, **dadurch gekennzeichnet, dass** sich auf beiden Seiten des Kolbens (14) unterhalb der Stromschiene (18) mehrere metallische Filterelemente (16, 16') befinden, die bis zu dem Hohlraum (25) reichen, sodass die Platine (19) während der Auslösung die Filterelemente (16, 16') elektrisch verbindet und der Lichtbogen bei weiterer Entfernung der Platine von den Enden der Stromschiene auf das metallische Filterelement umsteigt, wodurch die Energie aus der Systeminduktivität in Verlustwärme im Filter umgewandelt wird.

2. Stromtrenner nach Anspruch 1, **dadurch gekennzeichnet, dass** das Filterelement (16) im nicht ausgelösten Zustand elektrisch von der Stromschiene (18) isoliert ist.

3. Stromtrenner nach Anspruch 1 oder 2, **dadurch gekennzeichnet, dass** die Platine (19) nach der Auslösung zwischen den Filterelementen (16, 16') verbleibt oder diese wieder verlässt.

4. Stromtrenner nach einem der Ansprüche 1 bis 3, **dadurch gekennzeichnet, dass** im Stromtrenner zusätzlich ein Löschmittel vorgesehen ist.

5. Stromtrenner nach Anspruch 4, **dadurch gekennzeichnet, dass** das Löschmittel eine Siliziumverbindung ist.

6. Stromtrenner nach Anspruch 5, **dadurch gekennzeichnet, dass** das Löschmittel ein Silikonöl oder ein silikonhältiges Fett ist.

7. Stromtrenner nach einem der Ansprüche 1 bis 6, **dadurch gekennzeichnet, dass** sich zum Verhindern des Einquetschens des Lichtbogens durch den Trennstempel im Gehäuse Aussparungen zwischen der Stromschiene (18) und den Filterelementen (16, 16') befinden.

8. Stromtrenner nach einem der Ansprüche 1 bis 7, **dadurch gekennzeichnet, dass** die Filterelemente (16, 16') gegenüber der Außenwelt isoliert sind und das Gehäuse abgedichtet ist.

9. Stromtrenner nach einem der Ansprüche 1 bis 8, **dadurch gekennzeichnet, dass** seitlich der Stromschiene (18) zumindest ein weiteres Filterelement (16", 16‴) vorgesehen ist.

10. Stromtrenner nach einem der Ansprüche 1 bis 9, **dadurch gekennzeichnet, dass** das Filterelement bzw. die Filterelemente (16, 16', 16", 16‴) aus nichtrostendem Stahl, insbesondere in Form eines Metallgewirks, gebildet sind.

## Claims

1. Current breaker with a bus bar (18) and a piston (14) which is movable in a cavity (25) penetrated by the bus bar for breaking out a plate (19) from the bus bar (18), wherein the current breaker includes at least one metallic filter element (16), **characterized in that** on both sides of the piston (14) below the bus bar (18) a plurality of metallic filter elements (16, 16') are located that extend up to the cavity (25) such that during triggering the plate (19) electrically connects the filter elements (16, 16'), and the electric arc switches over to the metallic filter element at a greater distance of the plate from the ends of the bus bar, whereby the energy from the system inductance is converted into a heat loss in the filter.

2. Current breaker according to claim 1, **characterized in that** the filter element (16) in the non triggered state is electrically insulated from the bus bar (18).

3. Current breaker according to claim 1 or 2, **characterized in that,** after triggering, the plate (19) remains between the filter elements (16, 16') or leaves them.

4. Current breaker according to any of claims 1 to 3, **characterized in that** an extinguishing agent is provided in the current disconnector, additionally.

5. Current breaker according to claim 4, **characterized in that** the extinguishing agent is a silicon compound.

6. Current breaker according to claim 5, **characterized in that** the extinguishing agent is a silicone oil or a silicone containing grease.

7. Current breaker according to any of the claims 1 to 6, **characterized in that** between the bus bar (18) and the filter elements (16, 16') recesses are located in the housing for preventing the electric arc from being pinched by the disconnecting punch.

8. Current breaker according to any of claims 1 to 7, **characterized in that** the filter elements (16, 16') are insulated against the external environment, and the housing is sealed.

9. Current breaker according to any of claims 1 to 8, **characterized in that** at the side of the bus bar (18) at least one further filter element (16", 16'") is provided.

10. Current breaker according to any of claims 1 to 9, **characterized in that** the filter element and the filter elements (16, 16', 16", 16'"), respectively, are formed from stainless steel, in particular in the form of a metallic fabric.

## Revendications

1. Sectionneur comportant un rail conducteur (18) et un piston (14) qui est mobile dans une cavité (25) traversée par ledit rail conducteur et qui est destiné à causer une fracture dans le rail conducteur (18) pour ainsi en détacher une platine (19), ledit sectionneur comportant au moins un élément filtrant métallique (16), **caractérisé en ce que** plusieurs éléments filtrants métalliques (16, 16') sont disposés de part et d'autre du piston (14) et en-dessous du rail conducteur (18) et s'étendent jusque dans la cavité (25), faisant en sorte que la platine (19) vienne créer, lors du déclenchement, une connexion électrique entre les éléments filtrants (16, 16') et que l'arc électrique se rabatte, lorsque la platine s'éloigne davantage des extrémités du rail conducteur, sur ledit élément filtrant métallique, provoquant ainsi la dissipation de l'énergie issue de l'inductance systémique sous forme de chaleur au sein du filtre.

2. Sectionneur selon la revendication 1, **caractérisé en ce que** l'élément filtrant (16) est électriquement isolé du rail conducteur (18) à l'état non-déclenché.

3. Sectionneur selon les revendications 1 ou 2, **caractérisé en ce que** suite au déclenchement, la platine (19) va soit rester entre les éléments filtrants (16, 16') soit les quitter de nouveau.

4. Sectionneur selon l'une des revendications 1 à 3, **caractérisé en ce qu'**en outre, ledit sectionneur comporte un agent extincteur.

5. Sectionneur selon la revendication 4, **caractérisé en ce que** l'agent extincteur est un composé de silicium.

6. Sectionneur selon la revendication 5, **caractérisé en ce que** l'agent extincteur est une huile de silicone ou une graisse contenant du silicone.

7. Sectionneur selon l'une des revendications 1 à 6, **caractérisé en ce qu'**entre le rail conducteur (18) et les éléments filtrants (16, 16'), le boîtier est doté d'évidements pour empêcher que l'arc électrique ne reste coincé par le poinçon de détachement.

8. Sectionneur selon l'une des revendications 1 à 7, **caractérisé en ce que** les éléments filtrants (16, 16') sont isolés de l'espace extérieur et le boîtier est rendu étanche.

9. Sectionneur selon l'une des revendications 1 à 8, **caractérisé en ce qu'**au moins un élément filtrant supplémentaire (16", 16"') est disposé en position latérale au rail conducteur (18).

10. Sectionneur selon l'une des revendications 1 à 9, **caractérisé en ce que** l'élément filtrant ou les éléments filtrants (16, 16', 16", 16"') sont réalisés en acier inoxydable, notamment sous forme d'un tricot métallique.
